# EUROPEAN PATENT APPLICATION

(11) **EP 2 479 683 A1**
(43) Date of publication of application: **25.07.2012**
(21) Application number: 10816712.3
(22) Date of filing: 17.09.2010
(51) Int. Cl.: G06F 17/30

(54) **METHOD, APPARATUS AND SYSTEM FOR GENERATING BOOKMARKS**

(30) Priority: 17.09.2009 CN 200910174298
(71) Applicant: Huawei Technologies Co., Ltd., Shenzhen, Guangdong 518129 (CN)
(72) Inventor: YANG, Zanfeng, Shenzhen Guangdong 518129 (CN)
(74) Representative: Isarpatent
(86) International application number: PCT/CN2010/077049
(87) International publication number: WO 2011/032508

(57) **Abstract**

A method, an apparatus and a system for generating bookmarks are provided, through which the bookmarks can be automatically generated without participation of a user. The method for generating bookmarks includes: gathering access records of a user; analyzing the access records of the user; and generating the bookmarks according to an analysis result. The apparatus for generating bookmarks includes: a gathering unit, configured to gather access records of a user; an analysis unit, configured to analyze the access records of the user; and a bookmark generation unit, configured to generate the bookmarks according to a result of the analysis unit. The system for generating bookmarks includes: a gateway, configured to gather access records of a user and output the access records to a bookmark server; and the bookmark server, configured to analyze the access records of the user and generate the bookmarks according to an analysis result.

## Description

This application claims priority to Chinese Patent Application No. 200910174298.7, filed with the Chinese Patent Office on September 17, 2009 and entitled "METHOD, APPARATUS AND SYSTEM FOR GENERATING BOOKMARKS", which is incorporated herein by reference in its entirety.

### FIELD OF THE INVENTION

The present invention relates to the field of the Internet, and in particular, to a method, an apparatus and a system for generating bookmarks.

### BACKGROUND OF THE INVENTION

A bookmark is also called a favorite folder, which is for ease of future browse as a user collects favorite websites during browse of web pages on the Internet. Both a Personal Computer (PC) browser and a Wireless Application Protocol (WAP) browser have the bookmark function.

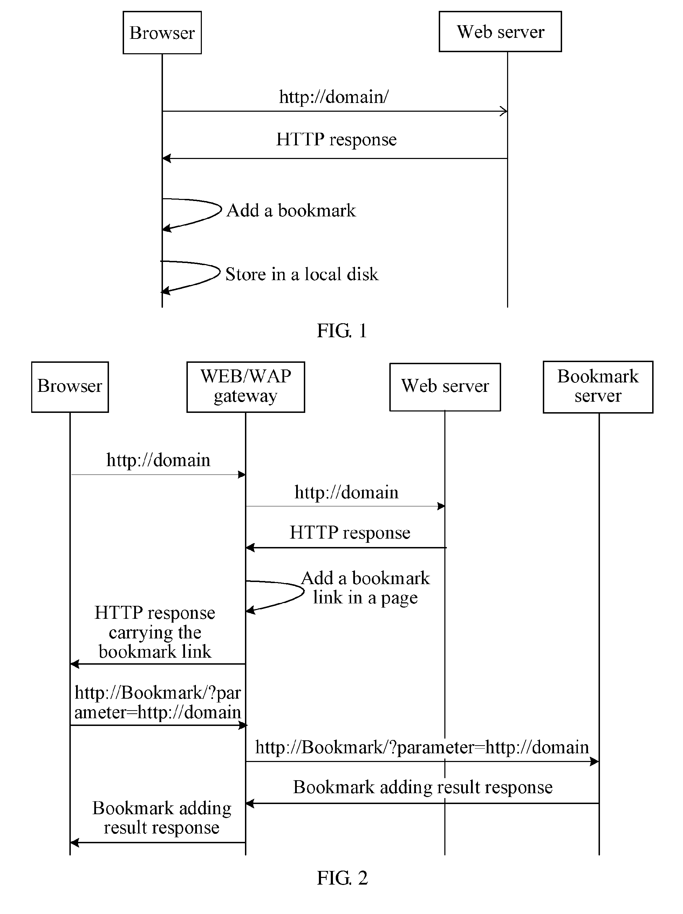

At present, a bookmark implementing method is shown in FIG. 1. In this method, the user directly accesses http://domain/ by using a browser; a Web server returns a response; the user collects the website as a bookmark by using a collection function provided by the browser; and the browser stores the bookmark in the local magnetic disk. The disadvantage of the method is that, the user needs to actively store the website as the bookmark and the bookmark is stored in the local disk, so the bookmark has the risk of being damaged or unrecoverable. Another bookmark implementing method is shown in FIG. 2, which is as follows. The user accesses http://domain/ by a browser through a WEB/WAP gateway. The WEB/WAP gateway forwards a request to a Web server. The web server returns a response. The WEB/WAP gateway adds a bookmark toolbar in a page. The WEB/WAP gateway returns a page response added with the bookmark toolbar to the browser. The user collects the website as a bookmark by clicking a bookmark collecting function provided in the page. The browser sends the bookmark collecting request to the WEB/WAP gateway. The WEB/WAP gateway sends a mobile phone number, the website of the bookmark, and a title of the bookmark to a bookmark server. The bookmark server stores the bookmark of the user in the bookmark server according to the mobile phone number and returns a bookmark adding result response to the WEB/WAP gateway. The WEB/WAP gateway returns the bookmark adding result response to the browser.

In the second bookmark implementing method, although the bookmark is stored in the bookmark server and different users can be distinguished, the user still needs to actively store the website as the bookmark.

### SUMMARY OF THE INVENTION

An embodiment of the present invention provides a method for generating bookmarks, which is capable of automatically generating bookmarks without participation of a user.

The method for generating bookmarks includes:
gathering access records of a user;
analyzing the access records of the user; and
generating the bookmarks according to an analysis result.

An embodiment of the present invention provides an apparatus for generating bookmarks, which is capable of automatically generating bookmarks without participation of a user.

The apparatus for generating bookmarks includes:
a gathering unit, configured to gather access records of a user;
an analysis unit, configured to analyze the access records of the user; and
a bookmark generation unit, configured to generate the bookmarks according to a result of the analysis unit.

An embodiment of the present invention provides a system for generating bookmarks, which is capable of automatically generating bookmarks without participation of a user.

The system for generating bookmarks includes:
a gateway, configured to gather access records of a user and output the access records to a bookmark server; and
the bookmark server, configured to analyze the access records of the user and
generate the bookmarks according to an analysis result.

Through the method, the apparatus and the system, the access records of the user can be gathered and analyzed, and the bookmarks are automatically generated according to the analysis result. Therefore, the user is not required to actively store a website as the bookmark, thereby enhancing the browsing experience of the user.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.

Apparently, the accompanying drawings in the following description are only some embodiments of the present invention, and persons of ordinary skill in the art can derive other drawings from the accompanying drawings without creative efforts.
FIG. 1 is a flow chart of a method for generating bookmarks in the prior art;
FIG. 2 is a flow chart of another method for generating bookmarks in the prior art;
FIG. 3 is a flow chart of a method for generating bookmarks according to Embodiment 1 of the present invention;
FIG. 4 is a structure diagram of an apparatus for generating bookmarks according to Embodiment 2 of the present invention;
FIG. 5 is a structure diagram of an analysis unit of the apparatus for generating bookmarks in
FIG. 4;

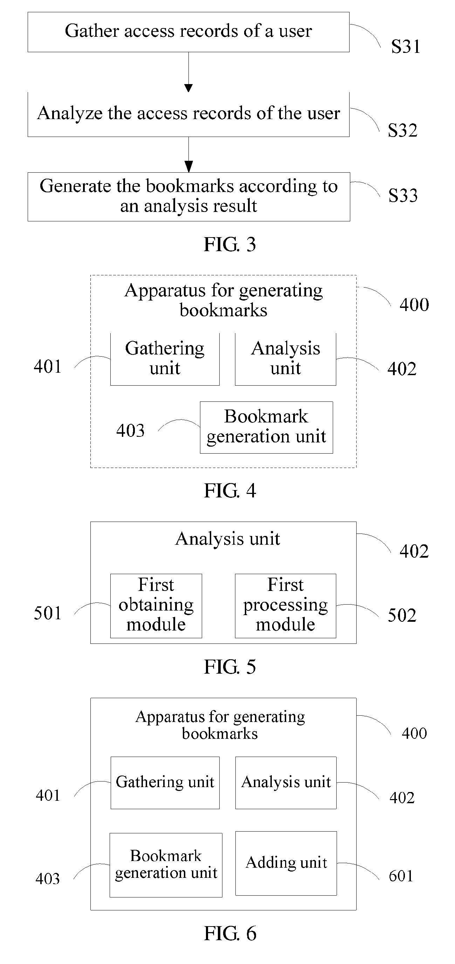

FIG. 6 is another structure diagram of an apparatus for generating bookmarks according to Embodiment 2 of the present invention;

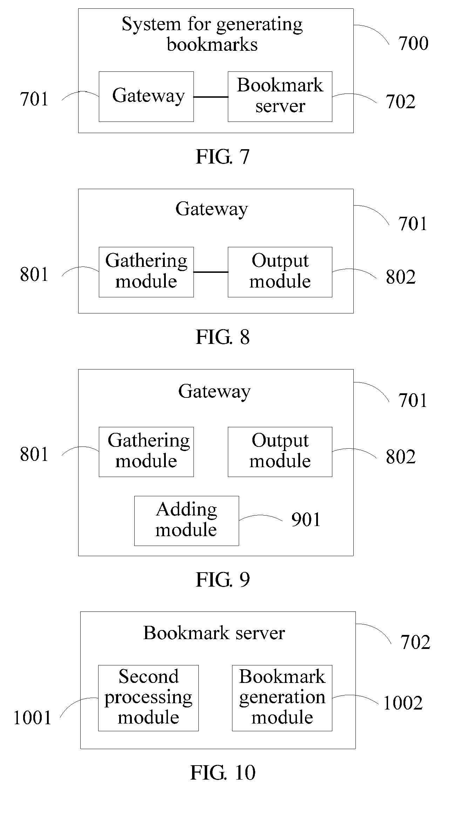

FIG. 7 is a structure diagram of a system for generating bookmarks according to Embodiment 3 of the present invention;
FIG. 8 is a structure diagram of a gateway in the system for generating bookmarks according to Embodiment 3 of the present invention;
FIG. 9 is another structure diagram of a gateway in the system for generating bookmarks according to Embodiment 3 of the present invention;
FIG. 10 is a structure diagram of a bookmark server in the system for generating bookmarks according to Embodiment 3 of the present invention; and

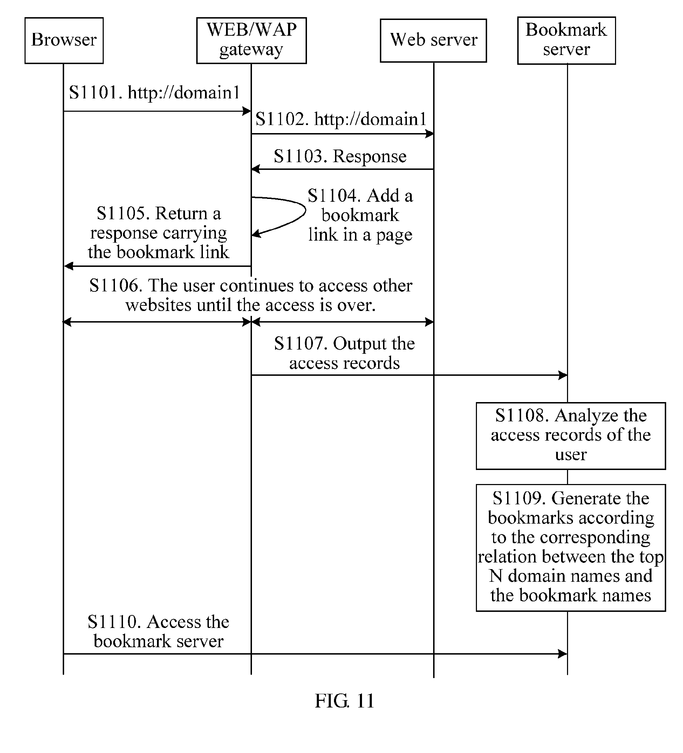

FIG. 11 is a work flow chart of a system for generating bookmarks according to Embodiment 3 of the present invention.

### DETAILED DESCRIPTION OF THE EMBODIMENTS

The embodiments of the present invention provide a method, an apparatus and a system for generating bookmarks, through which bookmarks can be automatically generated without participation of a user.

The present invention is described below in detail with reference to the accompanying drawings. The embodiments to be described are only a part rather than all of the embodiments of the present invention. Persons of ordinary skill in the art can derive other embodiments based on the embodiments of the present invention without creative efforts, which all fall within the scope of the present invention.

### Embodiment 1

As shown in FIG. 3, a method for generating bookmarks according to an embodiment of the present invention includes:
Step S31: Gathering access records of a user.
Step S32: Analyzing the access records of the user.
Step S33: Generating the bookmarks according to an analysis result.

Through the method, the access records of the user can be gathered and analyzed, and the bookmarks are automatically generated according to the analysis result; therefore, the user is not required to actively store a website as the bookmark, thereby enhancing the browsing experience of the user.

Further, before step S31, the method may further include: adding a bookmark toolbar link in a page accessed by the user. In this way, if the user wants to manage the bookmarks thereof, the user may directly access a bookmark management page through the link.

Further, the access records of the user may include: a user identifier, a domain name, and number of accessed times, etc.

Further, on the basis of the foregoing access records of the user, step S32 may include: obtaining top N domain names in terms of the number of accessed times by the user in a period of time; and using the top N domain names as the corresponding bookmark names. Alternatively, step S32 may also include: obtaining top N domain names in terms of the number of accessed times by the user in a period of time; and initiating a request to servers corresponding to the top N domain names, obtaining titles from web pages corresponding to the domain names, and using the titles as the corresponding bookmark names. It should be understood that, when the titles are used as the corresponding bookmark names, a corresponding relationship between the domain names and the corresponding bookmark names may be established in the mean while, and in this way, it is not required to re-obtain the titles corresponding to the domain names each time.

Alternatively, step S32 may also include:
Step S321: Obtaining top N domain names in terms of the number of the accessed times by the user in a period of time.
Step S322: Matching the top N domain names with the bookmark names according to the pre-configured corresponding relationship between the domain names and the bookmark names, for example, http://www.huawei.com/ corresponds to "huawei", and "http://www.sina.com.cn/"corresponds to "sina".
Step S323: If one of the top N domain names is not matched, initiate a request to a server corresponding to the domain name, obtain a title from the web page corresponding to the domain name, and use the title as the bookmark name. It should be understood that, when the title is used as the bookmark name, the corresponding relationship between the domain name and the corresponding bookmark name may be established in the mean while, so as to update the pre-configured corresponding relationship between the domain names and the bookmark names.

Through step S32, the access records of the user can be analyzed on the basis of the user identifier, and therefore, different users can be distinguished, thereby protecting privacy of the user.

### Embodiment 2

As shown in FIG. 4, an embodiment of the present invention provides an apparatus 400 for generating bookmarks, where the apparatus includes:
a gathering unit 401, configured to gather access records of a user;
a analysis unit 402, configured to analyze the access records of the user; and
a bookmark generation unit 403, configured to generate the bookmarks according
to a result of the analysis unit 402.

Through the apparatus 400, the access records of the user can be gathered and analyzed, and the bookmarks are automatically generated according to the analysis result; therefore, the user is not required to actively store a website as the bookmark, thereby enhancing the browsing experience of the user.

Further, the access records may include: a user identifier, a domain name and number of accessed times, etc.

Further, on the basis of the access records of the user, as shown in FIG. 5, the analysis unit 402 includes:
a first obtaining module 501; configured to obtain top N domain names in terms of the number of accessed times by the user in a period of time; and
a first processing module 502; configured to use the top N domain names as corresponding bookmark names, or initiate a request to servers corresponding to the top N domain names, obtain titles from web pages corresponding to the domain names, and use the titles as the bookmark names, or match the top N domain names with the bookmark names according to a pre-configured corresponding relationship between domain names and the bookmark names, for example, http://www.huawei.com/ corresponds to "huawei", and
"http://www.sina.com.cn/"corresponds to "sina", if one of the top N domain names is not matched, initiate a request to a server corresponding to the domain name,
obtain a title from the web page corresponding to the domain name, and use the title as the bookmark name. It should be understood that, when the first processing module 502 uses the titles as the corresponding bookmark names, the corresponding relationship between the domain names and the corresponding bookmark names may be established at the same time, and in this way, it is not required to re-obtain the titles corresponding to the domain names each time.

Through the analysis unit 402, the access records of the user are analyzed on the basis of the user identifier, so different users can be distinguished, thereby protecting privacy of the user.

Further, as shown in FIG. 6, the apparatus 400 further includes an adding unit 601, which is configured to add a bookmark toolbar link in a web page accessed by the user. In this way, if the user wants to manage the bookmarks thereof, the user may directly access a bookmark management page through the link.

The apparatus 400 shown in this embodiment may be located at a WEB/WAP gateway, a service control gateway, or the like.

### Embodiment 3

As shown in FIG. 7, an embodiment of the present invention provides a system 700 for generating bookmarks, where the apparatus includes: a gateway 701 and a bookmark server 702.

The gateway 701 is configured to gather access records of a user and output the access records to the bookmark server 702; or also, the bookmark server 702 may actively access the gateway 701 to obtain the access records of the user.

In actual application, the gateway 701 may be a WEB/WAP gateway or a service control gateway.

The bookmark server 702 is configured to analyze the access records of the user and generate the bookmarks according to an analysis result.

Through the system 700, the access records of the user can be gathered and analyzed, and the bookmarks are automatically generated according to the analysis result; therefore, the user is not required to actively store a website as the bookmark, thereby enhancing the browsing experience of the user.

Further, the access records include: a user identifier, a domain name and number of accessed times, etc.

Further, as shown in FIG. 8, the gateway 701 includes:
a gathering unit 801, configured to gather the access records of the user; and
a output module 802, configured to output the access records to the bookmark server 702.

Further, as shown in FIG. 9, the gateway 701 may further include an adding module 901, which is configured to add a bookmark toolbar link in a web page accessed by the user. In this way, if the user wants to manage his/her own bookmarks, the user may directly access the bookmark server through the link to manage his/her own bookmarks.

Further, as shown in FIG. 10, the bookmark server 702 includes a second processing module 1001 and a bookmark generation module 1002.

The second processing module 1001 is configured to obtain the top N domain names in terms of the number of accessed times by the user in a period of time, use the top N domain names as the corresponding bookmark names, or initiate a request to servers corresponding to the top N domain names, obtain titles from the web pages corresponding to the domain names, and use the titles as the corresponding bookmark names, or match the top N domain names with the bookmark names according to a pre-configured corresponding relationship between domain names and the bookmark names, for example, http://www.huawei.com/ corresponds to "huawei", and "http://www.sina.com.cn/"corresponds to "sina", if one of the top N domain names is not matched, initiate a request to a server corresponding to the domain name, obtain a title from the web page corresponding to the domain name, and use the title as the bookmark name; and is further configured to import the top N domain names and the corresponding bookmark names into the bookmark generation module 1002. It should be understood that, when the second processing module 1001 uses the titles as the corresponding bookmark names, the corresponding relationship between the domain names and the corresponding bookmark names may be established at the same time, and in this way, it is not required to re-obtain the titles corresponding to the domain names each time.

The bookmark generation module 1002 is configured to generate the bookmarks according to the corresponding relationship between the top N domain names and the corresponding bookmark names.

The gateway is, for example, the WEB/WAP gateway in the following, so as to describe operation of the system 700 according to the embodiment of the present invention, which is shown in FIG. 11.

Step S1101: A user accesses http://domain1/ by a browser via the WEB/WAP gateway.

Step S 1102: The WEB/WAP gateway forwards a request to a web server.

Step S 1103: The web server returns a response.

Step S 1104: The WEB/WAP gateway adds a bookmark toolbar in a page.

Step S1105: The WEB/WAP gateway returns a page response added with the bookmark toolbar to the browser.

Step S1106: The user continues to access other websites until the access is over, in which an access process is the same as step S1101 to step S1105.

Step S1107: The WEB/WAP gateway outputs a page (such as, HTML, XHTML and WML) access record of the user to the bookmark server, in which the record includes a user identifier (for example, a mobile phone number), a domain name (for example, domain 1) and number of accessed times, etc.

Step S1108: The bookmark server analyzes the access records of the user in a period of time (for example, one day or one week), collects the top N domain names in terms of the number of accessed times by the user, and performs matching according to a pre-configured corresponding relationship between domain names and bookmark names, for example, http://www.huawei.com/ corresponds to "huawei", and "http://www.sina.com.cn/"corresponds to "sina". If the matching is unsuccessful, the bookmark server initiates a request to the server corresponding to the domain name, obtains a title from a web page and uses the title as the bookmark name.

Step S1109: The bookmark server generates the bookmarks according to the top N domain names and the bookmark names.

Step S1110: The user can access the automatically generated bookmarks through the bookmark toolbar link added by the WEB/WAP gateway in the page or by directly accessing the bookmark server URL.

Persons skilled in the art should understand that, the technical solution is not limited to the WEB/WAP gateway which is an explicit proxy server. If other network element apparatuses can implement implicit proxy server with transparent proxy, such as an Internet Proxy or a Service Control Gateway, which has a function of transparently changing the request of the user and a response packet (for example, inserting the bookmark toolbar), automatic bookmarks at a network side may be also implemented through the present invention. Persons of ordinary skill in the art should understand that all or a part of the processes of the method according to the embodiments may be implemented by a computer program instructing relevant hardware. The program may be stored in a computer readable storage medium. When the program is run, the processes of the methods according to the embodiments are performed. The storage medium may be a magnetic disk, an optical disk, a read-only memory (ROM) or a random access memory (RAM).

The above descriptions are merely preferred embodiments of the present invention, but the protection scope of the present invention is not limited hereto. Any modification, equivalent replacement, or improvement made by persons skilled in the art without departing from the spirit and principle of the present invention should fall within the protection scope of the present invention. Therefore, the protection scope of the present invention is subject to the protection scope of the claims.

## Claims

1. A method for generating bookmarks, comprising:
gathering access records of a user;
analyzing the access records of the user; and
generating the bookmarks according to an analysis result.

2. The method according to claim 1, wherein before the gathering the access records of the user, the method further comprises: adding a bookmark toolbar link in a page accessed by the user.

3. The method according to claim 1 or 2, wherein the access records comprise: a user identifier, a domain name and number of accessed times.

4. The method according to claim 3, wherein the analyzing the access records of the user comprises:
obtaining top N domain names in terms of the number of accessed times by the user in a period of time, and directly storing the top N domain names as bookmark names;
or, the analyzing the access records of the user comprises:
obtaining top N domain names in terms of the number of accessed times by the user in a period of time; and initiating a request to servers corresponding to the top N domain names, obtaining titles from web pages corresponding to the domain names, and using the titles as the corresponding bookmark names;
or, the analyzing the access records of the user comprises:
obtaining top N domain names in terms of the access times of the user in a period of time;
matching the top N domain names with the bookmark names according to a pre-configured corresponding relationship between domain names and the bookmark names; and
if one of the top N domain names is not matched, initiating a request to a server corresponding to the domain name, obtaining a title from the web page corresponding to the domain name, and using the title as the bookmark name.

5. The method according to claim 4, wherein after using the title as the bookmark name, the method further comprises: establishing the corresponding relationship between the domain names and the bookmark names.

6. An apparatus for generating bookmarks, comprising:
a gathering unit, configured to gather access records of a user;
an analysis unit, configured to analyze the access records of the user; and
a bookmark generation unit, configured to generate the bookmarks according to a result of the analysis unit.

7. The apparatus according to claim 6, wherein the access records comprise: a user identifier, a domain name and number of accessed times.

8. The apparatus according to claim 7, wherein the analysis unit comprises:
a first obtaining module, configured to obtain top N domain names in terms of the number accessed times by the user in a period of time;
a first processing module, configured to directly store the top N domain names as bookmark names;
or configured to initiate a request to servers corresponding to the top N domain names, obtain titles from web pages corresponding to the domain names, and use the titles as the bookmark names;
or configured to match the top N domain names with the bookmark names according to a pre-configured corresponding relationship between domain names and the bookmark names, if one of the top N domain names is not matched, initiate a request to a server corresponding to the domain name, obtain a title from the web page corresponding to the domain name, and use the title as the bookmark name.

9. The apparatus according to claim 8, wherein the first processing module is further configured to establish the corresponding relationship between the domain names and the corresponding bookmark names after using the title as the bookmark name.

10. The apparatus according to claim 6, 7, 8 or 9, further comprising: an adding unit, configured to add a bookmark toolbar link in a page accessed by the user.

11. A system for generating bookmarks, comprising:
a gateway, configured to gather access records of a user and output the access records to a bookmark server; and
the bookmark server, configured to analyze the access records of the user and generate the bookmarks according to an analysis result.

12. The system according to claim 11, wherein the access records comprise: a user identifier, a domain name and number of accessed times.
